# EUROPÄISCHE PATENTSCHRIFT

(11) **EP 1 213 507 B1**
(45) Veröffentlichungstag und Bekanntmachung des Hinweises auf die Patenterteilung: **20.12.2006**
(21) Anmeldenummer: 01123827.6
(22) Anmeldetag: 05.10.2001
(51) Int. Cl.: F16H 41/24

(54) **Mitnehmerscheibe mit Zahnkranz zur drehfesten Verbindung einer Brennkraftmaschine mit einem Automatikgetriebe**
Driving disc with toothed ring for a non-rotary connection between a combustion engine and an automatic transmission
Plateau d' entrainement avec anneau denté pour une connection non-rotative entre moteur à combustion interne et une transmission automatique

(30) Priorität: 05.12.2000 DE 10060406
(43) Veröffentlichungstag der Anmeldung: 12.06.2002
(73) Patentinhaber: Bayerische Motoren Werke Aktiengesellschaft, 80809 München (DE)
(72) Erfinder: Fischer, Adolf, 85540 Haar (DE)

(56) Entgegenhaltungen:
- EP-A- 0 251 243
- EP-A- 0 984 184
- DE-C- 19 905 713
- DE-U1- 8 501 367
- US-A- 5 323 665
- US-A- 5 938 533

## Beschreibung

Die Erfindung bezieht sich nach dem Oberbegriff des Patentanspruches 1 auf eine Mitnehmerscheibe mit Zahnkranz zur drehfesten Verbindung einer Brennkraftmaschine mit einem Automatikgetriebe, wobei die mit maschinen- und getriebeseitigen Verbindungseinrichtungen ausgerüstete Mitnehmerscheibe von relativ geringer Blechstärke über speichenartige Abschnitte mit dem Zahnkranz drehfest verbunden ist und in schwingungsfähigen Bereichen angeordnete Ausnehmungen aufweist.

Eine derartige Mitnehmerscheibe ist beispielsweise aus der japanischen Patent-Offenlegungsschrift 2000-74175 bekannt, wobei die Mitnehmerscheibe im äußeren Umfang dem Zahnkranz benachbart zur Ausbildung speichenartiger Abschnitte entsprechend angeordnete Ausnehmungen aufweist. Mit diesen Ausnehmungen sind beim Eingriff eines Starterritzels in den Zahnkranz der Mitnehmerscheibe anregbare schwingfähige Bereiche der Mitnehmerscheibe deutlich reduziert.

Wie aus der Zeichnung des o.g. Patent-Dokumentes hervorgeht, reicht allein die Flächenreduzierung der Mitnehmerscheibe nicht aus für eine ausreichende Lärmreduzierung an der Mitnehmerscheibe. Wie aus diesen Zeichnungen hervorgeht, weist jede der Ausnehmungen der bekannten Mitnehmerscheibe eine tangential gerichtete Begrenzung auf, längs der ein- oder mehrfach abgewinkelte Leisten angeordnet sind. Diese die Mitnehmerscheibe lokal aussteifenden Leisten bewirken jedoch nur eine begrenzte Bedämpfung für den mittleren Umfangsbereich bis zur maschinenseitigen Verbindung.

Der Erfindung liegt die Aufgabe zugrunde, eine großflächige Bedämpfung an der Mitnehmerscheibe mit verfahrenstechnisch einfach auszubildender Halterung an der Mitnehmerscheibe aufzuzeigen.

Diese Aufgabe ist mit dem Patentanspruch 1 dadurch gelöst, dass die Mitnehmerscheibe zumindest partiell flächig mittels einer Auflage bedämpft ist, wobei die Auflage mit hohlen, die Mitnehmerscheibe über Durchbrechungen durchsetzenden Fortsätzen ausgebildet ist, die jenseits der Mitnehmerscheibe zur Befestigung der Auflage nach Hohlnietart zur Anlage an der Mitnehmerscheibe umgeformt sind.

Vorteilhafterweise dient für die Bedämpfung eine gegenüber der Blechstärke der Mitnehmerscheibe dünnere Blechauflage mit einstückig ausgeformten Fortsätzen, wobei die Fortsätze in der Mitnehmerscheibe der maschinenseitigen Verbindung sowie dem Zahnkranz in den speichenartigen Abschnitten jeweils benachbart angeordnete Durchbrechungen formschlüssig durchsetzen.

In weiterer vorteilhafter Ausgestaltung ist die Blechauflage als eine Ronde mit den Ausnehmungen der Mitnehmerscheibe angepassten Ausschnitten einschließlich einer dem maschinenseitigen Verbindungsbereich zugeordneten Zentralöffnung ausgebildet, wobei die Ronde weiter mittels einer topfartigen Berandung in einem axialen Vorsprung des Zahnkranzes zentriert zusätzlich mit Presssitz angeordnet ist.

Zusätzlich ist die Bedämpfungs-Auflage bzw. Blechauflage mit der Mitnehmerscheibe zumindest partiell verklebt, womit vorteilhafterweise ein partielles Schwirren der Blechauflage vermieden ist.

Zur weiteren vorteilhaften Ausgestaltung der Mitnehmerscheibe für den getriebeseitigen Anschlussbereich sind zwischen speichenartigen Abschnitten der Mitnehmerscheibe über konzentrische Ausnehmungen freigestellte, axial gerichtete Durchdrückungen als Träger getriebeseitiger Verbindungseinrichtungen ebenfalls bedämpft.

Mit der erfindungsgemäßen, vorbeschriebenen Gestaltung der Mitnehmerscheibe ist die Halterung der Bedämpfungs-Auflage in vorteilhaft kostengünstiger Art und Weise dadurch erreicht, dass auf die mit Ausnehmungen und Durchbrechungen versehene Mitnehmerscheibe und/oder auf die mit Ausschnitten einschließlich der Zentralöffnung versehene, als berandete Ronde ausgebildete Blechauflage ein Kleber aufgebracht wird, und dass anschließend die Blechauflage im Zahnkranz zentriert gegen die Mitnehmerscheibe gepresst wird mit nachfolgender Durchstellung der Fortsätze mittels Ziehstempeln durch die Durchbrechungen der Mitnehmerscheibe hindurch, wobei schlussendlich die über die Mitnehmerscheibe hinausragenden hohlen Fortsätze zur Anlage an der der Blechauflage abgewandten Seite der Mitnehmerscheibe hohlnietartig umgeformt werden.

Die Herstellkosten der Halterung der Bedämpfungsauflage sind weiter vorteilhaft dadurch reduziert, dass die getriebeseitigen Durchdrückungen der Mitnehmerscheibe mittels eines Stempels ausgeformt werden, und dass nach dieser Ausformung die Fortsätze mit im Stempel gesondert angeordneten Umformstempeln umgeformt werden.

Die Erfindung ist anhand eines in der Zeichnung dargestellten Ausführungsbeispiels beschrieben. Es zeigt
- Figur 1: eine Mitnehmerscheibe mit Zahnkranz in Draufsicht,
- Figur 2: die Mitnehmerscheibe im Querschnitt gemäß der Linie II-II, und
- Figur 3: einen Detail-Schnitt gemäß der Linie III-III durch eine hohlnietartige Befestigung der Bedämpfungs-Auflage.

Eine Mitnehmerscheibe 1 mit einem Zahnkranz 2 dient der drehfesten Verbindung einer nicht gezeigten Brennkraftmaschine mit einem nicht dargestellten Automatikgetriebe. Die von relativ geringer Blechstärke ausgebildete Mitnehmerscheibe 1 ist mit maschinen- und getriebeseitigen Verbindungseinrichtungen ausgerüstet und steht über speichenartige Abschnitte 3 mit dem Zahnkranz 2 in drehfester Verbindung. Weiter weist die Mitnehmerscheibe 1 in schwingungsfähigen Bereichen angeordnete Ausnehmungen 4 auf.

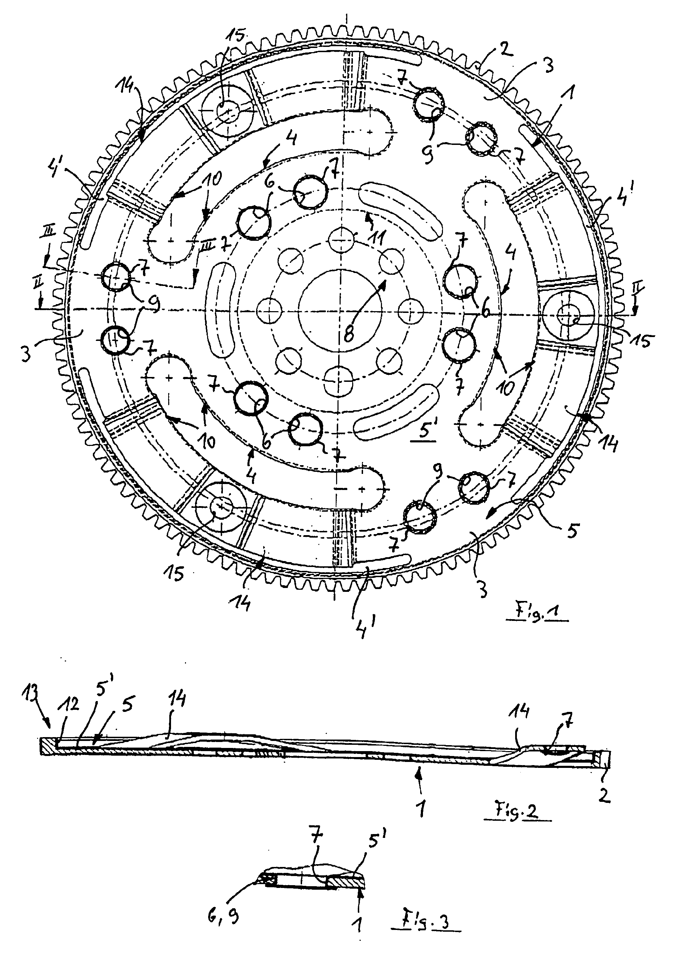

Zur Erzielung einer großflächigen Bedämpfung der Mitnehmerscheibe 1 mit verfahrenstechnisch einfach auszubildender Halterung der Bedämpfung an der Mitnehmerscheibe 1 wird vorgeschlagen, dass die Mitnehmerscheibe 1 zumindest partiell flächig mittels einer Auflage 5 bedämpft ist, wobei die Auflage 5 mit hohlen, die Mitnehmerscheibe 1 über Durchbrechungen 6, 9 durchsetzenden Fortsätzen 7 ausgebildet ist, die jenseits der Mitnehmerscheibe 1 zur Befestigung der Auflage 5 nach Hohlnietart zur Anlage an der Mitnehmerscheibe 1 umgeformt sind, Figur 3.

Wie aus Figur 3 näher hervorgeht, dient eine gegenüber der Blechstärke der Mitnehmerscheibe 1 dünnere Blechauflage 5' mit einstückig ausgeformten Fortsätzen 7 der Bedämpfung, wobei die Fortsätze 7 in der Mitnehmerscheibe 1 der maschinenseitigen Verbindung 8 sowie dem Zahnkranz 2 in den speichenartigen Abschnitten 3 jeweils benachbart angeordnete Durchbrechungen 6, 9 formschlüssig durchsetzen.

Weiter zeigen die Figuren 1 und 2, dass die Blechauflage 5' als eine Ronde mit den Ausnehmungen 4 der Mitnehmerscheibe 1 angepassten Ausschnitten 10 einschließlich einer dem maschinenseitigen Verbindungsbereich 8 zugeordneten Zentralöffnung 11 ausgebildet ist und die Ronde weiter mittels einer topfartigen Berandung 12 in einem axialen Vorsprung 13 des Zahnkranzes 2 zentriert zusätzlich mit Pressung angeordnet ist.

Um ein Schwirren der relativ dünnen Bedämpfungs-Blechauflage 5' zwischen den Gruppen von hohlnietartigen Befestigungen zu vermeiden, kann die Blechauflage 5' mit der Mitnehmerscheibe 1 zumindest partiell verklebt sein. Die Verklebung kann mittels Kalt- oder Heißkleber erfolgen, ein Auftrag eines Klebers mittels Siebdruckverfahren ist vorteilhaft.

Ist für eine getriebeseitig elastische Anbindung der Mitnehmerscheibe 1 eine Gestaltung derart vorgesehen, dass zwischen speichenartigen Abschnitten 3 der Mitnehmerscheibe 1 über konzentrische Ausnehmungen 4, 4' freigestellte, axial gerichtete Durchdrückungen 14 als Träger getriebeseitiger Verbindungseinrichtungen 15 dienen, so sind diese Durchdrückungen 14 ebenfalls mit der Blechauflage 5' bedämpft.

Ein vorteilhaftes Verfahren zur Anordnung der Bedämpfungs-Auflage 5' auf der Mitnehmerscheibe 1 sieht vor, dass auf die mit Ausnehmungen 4, 4' und Durchbrechungen 6, 9 versehene Mitnehmerscheibe 1 und/oder auf die mit Ausschnitten 10 einschließlich der Zentralöffnung 11 versehene als berandete Ronde ausgebildete Blechauflage 5' ein Kleber aufgebracht wird und dass anschließend die Blechauflage 5' im Zahnkranz 2 zentriert gegen die Mitnehmerscheibe 1 gepresst wird mit nachfolgender Durchstellung der Fortsätze 7 aus der Blechauflage 5' mittels Ziehstempeln durch die Durchbrechungen 6, 9 der Mitnehmerscheibe 1 hindurch, wobei schlussendlich die über die Mitnehmerscheibe 1 hinausragenden hohlen Fortsätze 7 zur Anlage an der der Blechauflage 5' abgewandten Seite der Mitnehmerscheibe 1 hohlnietartig umgeformt werden.

Kostengünstig ist das vorgenannte Herstellverfahren ferner dadurch, dass die getreibeseitigen Durchdrückungen 14 der Mitnehmerscheibe 1 mittels eines nicht gezeigten Stempels ausgeformt werden und dass nach dieser Ausformung die Fortsätze 7 mit in diesem Stempel gesondert angeordneten Umformstempeln umgeformt werden.

Die Erfindung ermöglicht die Anordnung eines topfförmigen oder ebenen Bedämpfungsbleches 5' in einem Arbeitsvorgang, wodurch in vorteilhafter Weise niedrige Kosten bei hoher Geräuschdämpfung erzielt sind.

Im Rahmen der Erfindung kann die Auflage 5 bzw. die Blechauflage 5' auch durch die Ausnehmungen 4 der Mitnehmerscheibe 1 durchgestellt und jenseits umgebördelt sein.

## Patentansprüche

1. Mitnehmerscheibe mit Zahnkranz zur drehfesten Verbindung einer Brennkraftmaschine mit einem Automatikgetriebe,
- wobei die mit maschinen- und getriebeseitigen Verbindungseinrichtungen ausgerüstete Mitnehmerscheibe (1) von relativ geringer Blechstärke über speichenartige Abschnitte (3) mit dem Zahnkranz (2) drehfest verbunden ist, und
- in schwingungsfähigen Bereichen angeordnete Ausnehmungen (4) aufweist,
**dadurch gekennzeichnet,**
- **dass** die Mitnehmerscheibe (1) zumindest partiell flächig mittels einer Auflage (5) bedämpft ist, wobei
- die Auflage (5) mit hohlen, die Mitnehmerscheibe (1) über Durchbrechungen (6, 9)/Ausnehmungen (4) durchsetzenden Fortsätzen (7) ausgebildet ist, die
- jenseits der Mitnehmerscheibe (1) zur Befestigung der Auflage (5) nach Hohlnietart zur Anlage an der Mitnehmerscheibe (1) umgeformt sind.

2. Mitnehmerscheibe nach Anspruch 1, **dadurch gekennzeichnet,**
- **dass** eine gegenüber der Blechstärke der Mitnehmerscheibe (1) dünnere Blechauflage (5') mit einstückig ausgeformten Fortsätzen (7) der Bedämpfung dient, wobei
- die Fortsätze (7) in der Mitnehmerscheibe (1) der maschinenseitigen Verbindung (8) sowie dem Zahnkranz (2) in den speichenartigen Abschnitten (3) jeweils benachbart angeordnete Durchbrechungen (6, 9) formschlüssig durchsetzen.

3. Mitnehmerscheibe nach Anspruch 2, **dadurch gekennzeichnet,**
- **dass** die Blechauflage (5') als eine Ronde mit den Ausnehmungen (4) der Mitnehmerscheibe (1) angepassten Ausschnitten (10) einschließlich einer dem maschinenseitigen Verbindungsbereich (8) zugeordneten Zentralöffnung (11) ausgebildet ist, und
- die Ronde weiter mittels einer topfartigen Berandung (12) in einem axialen Vorsprung (13) des Zahnkranzes (2) zentriert zusätzlich mit Presssitz angeordnet ist.

4. Mitnehmerscheibe nach den Ansprüchen 1 bis 3, **dadurch gekennzeichnet, dass** die Bedämpfungs-Auflage (5) bzw. Blechauflage (5') mit der Mitnehmerscheibe (1) zumindest partiell verklebt ist.

5. Mitnehmerscheibe nach den Ansprüchen 1 bis 4, **dadurch gekennzeichnet, dass** zwischen speichenartigen Abschnitten (3) der Mitnehmerscheibe (1) über konzentrische Ausnehmungen (4, 4') freigestellte, axial gerichtete Durchdrückungen (14) als Träger getriebeseitiger Verbindungseinrichtungen (15) ebenfalls bedämpft sind.

6. Verfahren zur Anordnung der Bedämpfungs-Auflage auf der Mitnehmerscheibe, **dadurch gekennzeichnet,**
- **dass** auf die mit Ausnehmungen (4, 4') und Durchbrechungen (6, 9) versehene Mitnehmerscheibe (1) und/oder auf die mit Ausschnitten (10) einschließlich der Zentralöffnung (11) versehene, als berandete Ronde ausgebildete Blechauflage (5') ein Kleber aufgebracht wird, und
- **dass** anschließend die Blechauflage (5') im Zahnkranz (2) zentriert gegen die Mitnehmerscheibe (1) gepresst wird mit
- nachfolgender Durchstellung der Fortsätze (7) mittels Ziehstempeln durch die Durchbrechungen (6, 9) der Mitnehmerscheibe (1) hindurch, wobei
- schlussendlich die über die Mitnehmerscheibe (1) hinausragenden hohlen Fortsätze (7) zur Anlage an der der Blechauflage (5') abgewandten Seite der Mitnehmerscheibe (1) hohlnietartig umgeformt werden.

7. Verfahren nach Anspruch 6, **dadurch gekennzeichnet,**
- **dass** die getriebeseitigen Durchdrückungen (14) der Mitnehmerscheibe (1) mittels eines Stempels ausgeformt werden, und
- **dass** nach dieser Ausformung die Fortsätze (7) mit im Stempel gesondert angeordneten Umformstempeln umgeformt werden.

## Claims

1. A driver disc with a toothed rim for co-rotatably connecting an internal combustion engine to an automatic gear,
- wherein the driver disc (1), which is made of relatively thin metal and is equipped with devices for connecting to the engine and to the gear, is co-rotatably connected by spoke-like portions (3) to the toothed rim (2) and
- has recesses (4) situated in vibratable regions,
**characterised in that**
- the driver disc (1) over at least part of its surface is given a vapour-deposited coating (5), wherein
- the coating (5) is formed with hollow extensions (7) extending through the driver disc (1) via apertures (6, 9) or recesses (4),
- the extensions being shaped on the other side of the driver disc (1) so as to fasten the coating (5) by tubular rivets or the like so that it bears on the driver disc (1).

2. A driver disc according to claim 1, **characterised in that**
- a metal coating (5') made of thinner metal than the driver disc (1) and with integrally formed extensions (7) is vapour-deposited, wherein
- the extensions (7) extend positively through neighbouring apertures (6, 9) in the driver disc (1) in the connection (8) on the engine side and in the spoke-like portions (3) in the toothed rim (2).

3. A driver disc according to claim 2,**characterised in that**
- the metal coating (5') is a disc with cut-outs (10) matching the recesses (4) in the driver disc (1) including a central opening (11) associated with the connecting region (8) on the engine side, and
- the disc is additionally centred with a force fit in an axial projection (13) from the rim (2), via a pot-like edge (12).

4. A driver disc according to claims 1 to 3, **characterised in that**
- the vapour-deposited coating (5) or sheet-metal coating (5') is at least partly stuck to the driver disc (1).

5. A driver disc according to claims 1 to 4,**characterised in that**
- axially directed pressed-through parts (14) separated by concentric recesses (4, 4') and holding connecting devices (15) on the gear side are likewise vapour-deposited between spoke-like portions (3) of the driver disc (1).

6. A method of disposing the vapour-deposited coating on the driver disc, **characterised in that**
- an adhesive is applied to the driver disc (1) formed with recesses (4, 4') and apertures (6, 6') and/or to the sheet-metal coating (5') in the form of an edged disc formed with cut-outs (10) including the central opening (11), and
- the sheet-metal coating (5') centred in the toothed rim (2) is then pressed against the driver disc (1) after which
- the projections (7) are pushed by drawing punches through the apertures (6, 9) in the driver disc (1) wherein
- finally the hollow projections (7), which extend beyond the driver disc (1), are shaped by tubular riveting or the like so that they bear on the side of the driver disc (1) remote from the sheet-metal coating (5').

7. A method according to claim 6, **characterised in that**
- the pushed-through parts (14) of the driver disc (1) on the gear side are shaped by a punch, and
- after shaping, the extensions (7) are shaped by shaping punches disposed separately in the punch.

## Revendications

1. Plateau d'entraînement à couronne dentée pour relier de façon solidaire en rotation un moteur à combustion interne à une transmission automatique,
- le plateau d'entraînement (1) d'une épaisseur de tôle relativement faible, muni côté moteur et côté transmission de dispositifs de liaison, étant relié de façon solidaire en rotation à la couronne dentée (2) par des segments (3) en forme de rayon, et
- le plateau présentant des évidements (4) disposés dans des zones susceptibles de vibrer,
- **caractérisé en ce que**
- le plateau d'entraînement (1) est amorti au moins sur une surface partielle au moyen d'une plaque (5),
- la plaque (5) est munie d'appendices (7) creux qui traversent le plateau d'entraînement (1) dans des passages (6, 9)/des évidements (4), et
- les appendices (7) sont sertis sur l'autre côté du plateau d'entraînement (1) pour fixer la plaque (5) en forme de rivets tubulaires en appui contre le plateau d'entraînement (1).

2. Plateau d'entraînement selon la revendication 1,
**caractérisé en ce que**
- pour l'amortissement, on utilise une plaque en tôle (5') plus mince par rapport à l'épaisseur de tôle du plateau d'entraînement (1), munie d'appendices (7) formés d'une seule pièce,
- les appendices (7) traversent par complémentarité de formes des passages (6, 9) disposés respectivement au voisinage les uns des autres dans le plateau d'entraînement (1) de la liaison (8) côté moteur ainsi que dans la couronne dentée (2) dans les segments (3) en forme de rayon.

3. Plateau d'entraînement selon la revendication 2,
**caractérisé en ce que**
- la plaque en tôle (5') est un flan circulaire muni de découpes (10) adaptées aux évidements (4) du plateau d'entraînement (1) et d'une ouverture centrale (11) associée à la zone de liaison (8) côté moteur, et
- le flan circulaire est en outre disposé par ajustage serré au moyen d'une bordure (12) en forme de pot dans une saillie axiale (13) au centre de la couronne dentée (2).

4. Plateau d'entraînement selon les revendications 1 à 3,
**caractérisé en ce que**
la plaque d'amortissement (5) ou la plaque en tôle (5') est au moins partiellement collée au plateau d'entraînement (1).

5. Plateau d'entraînement selon les revendications 1 à 4,
**caractérisé en ce que**
des enfoncements (14) axiaux dégagés entre des segments (3) en forme de rayon du plateau d'entraînement (1) par des évidements concentriques (4, 4') sont également amortis et servent de supports pour des dispositifs de liaison (15) côté transmission.

6. Procédé pour disposer la plaque d'amortissement sur le plateau d'entraînement,
**caractérisé en ce qu'**
- une colle est appliquée sur le plateau d'entraînement (1) muni d'évidements (4, 4') et de passages (6, 9) et/ou sur la plaque en tôle (5') en forme de flan circulaire munie de découpes (10) et de l'ouverture centrale (11), et
- la plaque en tôle (5') est ensuite pressée de manière centrée dans la couronne dentée (2) contre le plateau d'entraînement (1), puis
- les appendices (7) sont enfoncés au moyen de poinçons d'emboutissage à travers les passages (6, 9) du plateau d'entraînement (1), et
- les appendices (7) creux dépassant du plateau d'entraînement (1) sont finalement sertis en forme de rivets tubulaires pour s'appliquer contre la face du plateau d'entraînement (1) détournée de la plaque en tôle (5').

7. Procédé selon la revendication 6,
**caractérisé en ce que**
- les enfoncements (14) du plateau d'entraînement (1) côté transmission sont formés au moyen d'un poinçon, et
- après cette formation les appendices (7) sont sertis à l'aide de poinçons de sertissage disposés à part dans le poinçon.
